(19) Europäisches Patentamt
European Patent Office
Office européen des brevets

(11) **EP 1 533 866 B1**

(12) **FASCICULE DE BREVET EUROPEEN**

(45) Date de publication et mention de la délivrance du brevet:
**01.10.2008 Bulletin 2008/40**

(51) Int Cl.:
*H01Q 3/26* (2006.01)  *H01Q 3/30* (2006.01)
*G01S 13/24* (2006.01)  *G01S 13/42* (2006.01)

(21) Numéro de dépôt: **04104960.2**

(22) Date de dépôt: **11.10.2004**

(54) **Architecture d'antenne adaptative multifaisceaux à formation de faisceaux par le calcul**

Adaptive Phasengesteuerte Gruppenantenne mit digitaler Keulenformung

Adaptive phased array antenna with digital beam forming

(84) Etats contractants désignés:
**DE GB IT NL**

(30) Priorité: **18.11.2003 FR 0313493**

(43) Date de publication de la demande:
**25.05.2005 Bulletin 2005/21**

(73) Titulaire: **Thales**
**92200 Neuilly Sur Seine (FR)**

(72) Inventeur: **Auvray, Gérard**
**94117 ARCUEIL (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**FR-A- 2 838 244**

• **SMOLKO J A: "Optimization of pattern sidelobes in arrays with regular subarray architectures" ANTENNAS AND PROPAGATION SOCIETY INTERNATIONAL SYMPOSIUM, 1998. IEEE ATLANTA, GA, USA 21-26 JUNE 1998, NEW YORK, NY, USA,IEEE, US, 21 juin 1998 (1998-06-21), pages 756-759, XP010292312 ISBN: 0-7803-4478-2**
• **HANSEN R C: "Suppression of sub-array quantization lobes" PHASED ARRAY SYSTEMS AND TECHNOLOGY, 2000. PROCEEDINGS. 2000 IEEE INTERNATIONAL CONFERENCE ON DANA POINT, CA, USA 21-25 MAY 2000, PISCATAWAY, NJ, USA,IEEE, US, 21 mai 2000 (2000-05-21), pages 311-314, XP010504598 ISBN: 0-7803-6345-0**
• **LAM L K ET AL: "S-band electronically scanned active phased array antenna" 2000 IEEE AEROSPACE CONFERENCE, vol. 5, 18 mars 2000 (2000-03-18), - 25 mars 2000 (2000-03-25) pages 67-72, XP010517151 Piscataway, NJ, USA**

**EP 1 533 866 B1**

## Description

La présente invention concerne la réalisation d'une antenne adaptative multifaisceaux, à formation de faisceaux par le calcul, découpée en sous-réseaux. Cette antenne permet notamment de former des faisceaux dépourvus de lobes de réseaux parasites. Ce dispositif s'applique notamment à la lutte contre le brouillage des radars.

Les antennes actuelles qui mettent en oeuvre la formation adaptative de faisceaux par le calcul, ou FFC adaptative, présentent des inconvénients importants à l'émission et à la réception. Les inconvénients rencontrés sont notamment liés à leur structure.

Ces antennes à FFC adaptative sont constituées d'un grand nombre de modules d'émission / réception encore appelés T/R modules. Les T/R modules sont combinés entre eux pour former des sous-réseaux. Chaque sous-réseau se comporte comme une antenne élémentaire ayant ses propres plan et centre de phase.

En ce qui concerne la réception d'un signal, la formation d'un faisceau se fait en combinant les signaux issus des sous-réseaux qui constituent l'antenne globale. Pour constituer le signal correspondant à un faisceau donné chaque signal issu d'un sous-réseau est affecté d'un gain et d'un déphasage déterminé. Puis tous les signaux ainsi corrigés sont sommés. Les valeurs des pondérations en gain et en phase de chaque sous-réseau sont déterminées par des procédés connus, issus du domaine de l'antibrouillage adaptatif, la structure en sous-réseaux étant développée à des fins d'antibrouillage.

Comme dans le cas d'une antenne à balayage électronique mono faisceau classique, l'orientation globale de la grappe de faisceau d'une antenne multifaisceaux est réalisée quant à elle en jouant sur la phase relative des signaux issus des T/R modules. En agissant ainsi, on modifie l'orientation globale du plan de phase de l'antenne.

L'association des T/R modules en sous-réseaux telle qu'elle est réalisée, revient à effectuer une décomposition de l'antenne globale en antennes élémentaires de faibles dimensions. Chaque antenne élémentaire se comporte comme une source unitaire avec ses propres plan et centre de phase Le lobe d'antenne global est obtenu en recombinant les lobes des antennes élémentaires.

Cette décomposition en antennes élémentaires présente cependant des inconvénients :

- La dimension de ces antennes élémentaires étant faible par rapport à l'antenne globale, celles-ci présentent donc à l'émission aussi bien qu'à la réception un lobe dont le diagramme est plus large que celui d'une antenne de grande dimension classique.
- La combinaison de ces lobes entraîne par ailleurs la présence au niveau de l'antenne globale de lobes secondaires plus importants que ceux d'une antenne mono faisceau.
  La structure en sous-réseaux des antennes à FFC adaptative actuelles a donc pour effet de rendre celles-ci globalement moins performantes que les antennes à balayage électronique classiques notamment au niveau des lobes secondaires.

Des études menées par ailleurs montrent que pour pouvoir reconstituer de façon correcte un faisceau d'antenne à partir de sous-ensembles dont les plans de phase ne sont pas orientés dans la direction du faisceau, il faut que la distance entre les centres de phase des différents sous-ensembles soit inférieure à la demi longueur d'onde du signal. Or, dans le cas des sous-réseaux constituant une antenne à FFC, cette condition de distance n'est pas satisfaite et le faisceau formé est accompagné de lobes parasites dont la périodicité spatiale est fonction de l'espacement des centres de phase des différents sous-réseaux.

En revanche, dans le cas particulier où tous les sous-ensembles présentent un plan de phase orienté dans la direction du faisceau, il n'y a pas formation de lobes de réseaux.

On conçoit aisément que pour une antenne multifaisceaux à sous-réseaux, la condition d'orientation ci-dessus ne peut être réalisée, dans le meilleur des cas, que pour un seul faisceau. Les plans de phase des sous-réseaux ne sont pas, dans la plupart des cas, orientés dans la direction du faisceau à former. La seule façon accessible de former un faisceau dans une direction donnée est d'ajuster la phase du signal issu de chaque sous-réseau pour obtenir, par recombinaison, le faisceau voulu.

Les sous-réseaux constituent donc des antennes élémentaires qui présentent par construction des centres de phase éloignés les uns des autres. La distance entre leurs centres de phase est grande par rapport à la longueur d'onde. De ce fait, la mise en phase des signaux issus des différents sous-réseaux entraîne, lors de la formation du faisceau, l'apparition de lobes parasites. Ces lobes parasites ou lobes de réseaux sont la reproduction du lobe de faisceau désiré, suivant des directions déterminées par la distance séparant les centres de phase des sous-réseaux. Ainsi, du fait de leur organisation en sous-réseaux, les antennes à FFC actuelles forment des faisceaux qui présentent une périodicité spatiale non voulue.

La présence de ces lobes de réseaux a pour conséquence de rendre les antennes actuelles vulnérables au brouillage reçu dans la direction des lobes de réseaux. L'élimination d'un brouilleur pénétrant par un lobe de réseau s'accompagne d'un affaiblissement important du signal dans la direction du faisceau.

D'autres inconvénients sont par ailleurs liés à la nécessité qu'ont les dispositifs actuels équipés d'antennes à FFC d'émettre avec un diagramme de rayonnement élargi. Ce diagramme élargi est nécessaire pour permettre la réception d'un signal dans toutes les directions pointées par les faisceaux formés simultanément. Ce diagramme, plus large que celui d'une antenne classique, présente l'inconvénient d'entraîner une perte de sélectivité spatiale à l'émission. La sélectivité n'est plus alors réalisée que par le lobe du faisceau de réception, qui présente, comme cela a été dit précédemment, des lobes secondaires de mauvaise qualité.

Le document brevet français publié sous le numéro 2 838 244 le 10/10/2003, décrit une architecture d'antenne à FFC adaptative constituée d'un nombre M de sous-réseaux, permettant d'éviter la formation de lobes de réseaux en traitant séparément les signaux issus de chaque sous-réseau avant de combiner ceux-ci pour obtenir le signal correspondant à un faisceau donné. Ce traitement unitaire appliqué à chaque sous-réseau permet de faire en sorte que le plan de phase de chaque sous-réseau soit perpendiculaire à la direction du faisceau considéré. Ainsi, les plan de phase des différents sous-réseaux étant tous simultanément perpendiculaires à la direction du faisceau il n'y a avantageusement pas formation de lobes de réseaux parasites. En revanche, une telle architecture comporte un nombre élevé de voie de réception distinctes. Typiquement pour réaliser, suivant cette architecture, une antenne comportant M sous-réseaux et pouvant former N faisceaux, le nombre de voies de réception nécessaire est égal à $M \cdot N$..

Un but de l'invention est notamment de pallier les inconvénients cités. A cet effet l'invention a pour objet une antenne à FFC adaptative permettant la constitution simultanée de plusieurs faisceaux. L'antenne selon l'invention a notamment pour caractéristique de présenter pour chaque sous-réseau des plans de phase orientés perpendiculairement à la direction de chacun des faisceaux.

L'antenne selon l'invention comporte notamment des T/R modules assemblés en clusters. Les clusters sont eux-mêmes assemblés par groupes pour former des sous-réseaux et la combinaison des sous-réseaux forme les faisceaux.

Chaque cluster comporte une voie de sommation et plusieurs voies de correction. La voie de sommation effectue la somme de signaux issus des différents T/R modules associés au cluster. Le signal obtenu correspond à celui reçu dans la direction du faisceau $F_0$ perpendiculaire au plan de phase de l'antenne. Les voies de correction affectent à chaque signal issu d'un T/R module une correction en phase et en amplitude de façon à obtenir un signal représentatif de la différence vectorielle existant entre le signal reçu dans la direction d'un faisceau $F_n$ et celui reçu dans la direction $F_0$. Chaque cluster comporte autant de voies de correction que l'antenne comporte de faisceaux

L'utilisation d'une voie de sommation et de voies de correction présente l'avantage de réaliser une antenne multifaisceaux dépourvue de lobes de réseaux en n'utilisant qu'un nombre relativement faible de circuits récepteurs. Elle présente également l'avantage de mettre en oeuvre des clusters dont la structure est simple à réaliser.

L'invention permet avantageusement de former des faisceaux de réception simultanés de même qualité que le faisceau d'une antenne à balayage électronique mono faisceau classique, en particulier en ce qui concerne le niveau des lobes secondaires.

D'autres caractéristiques et avantages de l'invention apparaîtront à l'aide de la description qui suit, faite en regard des figures annexées qui représentent :

La figure 1, une illustration des problèmes liés à l'existence d'un large diagramme d'émission et à la présence de lobes de réseaux.

La figure 2, une illustration de la formation d'un faisceau par association de différents sous-réseaux dans les antennes actuelles.

La figure 3, L'illustration d'une décomposition possible d'une antenne en clusters ou groupes de T/R modules.

La figure 4, le schéma de principe de réalisation d'un cluster.

La figure 5, une illustration de l'opération d'élaboration du signal correcteur permettant de former un faisceau autre que le faisceau $F_0$.

La figure 6, l'illustration d'un exemple d'organisation en sous-réseaux selon l'invention

La figure 7, l'illustration schématique de la chaîne complète de formation et de traitement d'un faisceau.

Comme il a été rappelé précédemment, l'orientation globale du plan de phase d'une antenne multifaisceaux est réalisée, comme pour une antenne à balayage électronique mono faisceau classique, en jouant sur la phase relative des signaux issus des T/R modules. Pour des raisons de clarté, dans la suite de la description on considère que l'antenne garde une orientation constante et qu'on applique un déphasage nul aux T/R modules.

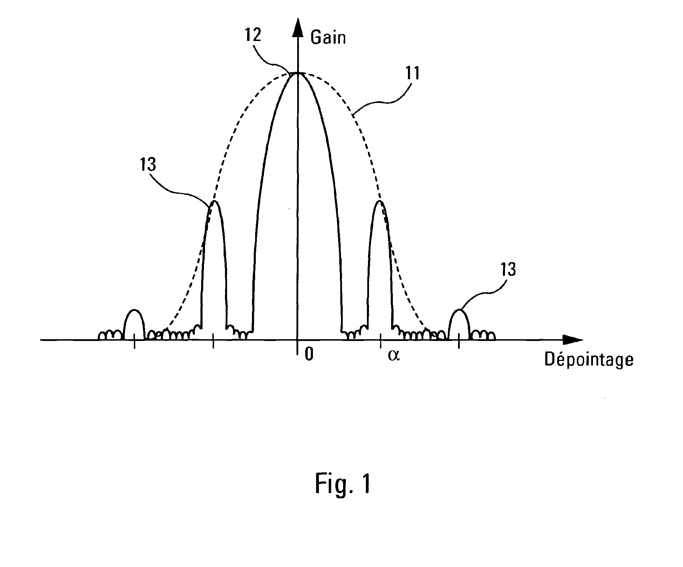

La figure 1 illustre sous forme d'un graphique les inconvénients induits par le mode de réalisation des antennes à FFC adaptative actuelles. Cette figure représente dans un seul plan et pour un faisceau donné, orienté dans un axe pris comme référence, les diagrammes d'émission et de réception. Le diagramme d'émission 11 étant nécessairement large, l'énergie susceptible d'être reçu par le faisceau 12 n'est pas assez significativement différente de celle susceptible d'être reçue par les lobes de réseaux 13. D'autre part, l'apparition d'un signal brouilleur dans un de ces lobes de réseaux, affectera de manière très importante la détection d'éventuels échos par le faisceau correspondant.

Ces lobes de réseaux ont une répétitivité angulaire $\alpha$ qui dépend du rapport $d/_{\lambda}$, rapport de la distance des centres de phase des sous-réseaux à la longueur d'onde du signal.

La présence de ces lobes de réseaux a pour conséquence de générer une ambiguïté sur la position angulaire d'un éventuel écho reçu par un radar équipé d'une antenne à FFC adaptative actuelle. Elle rend également le radar sensible au brouillage par les lobes de réseaux.

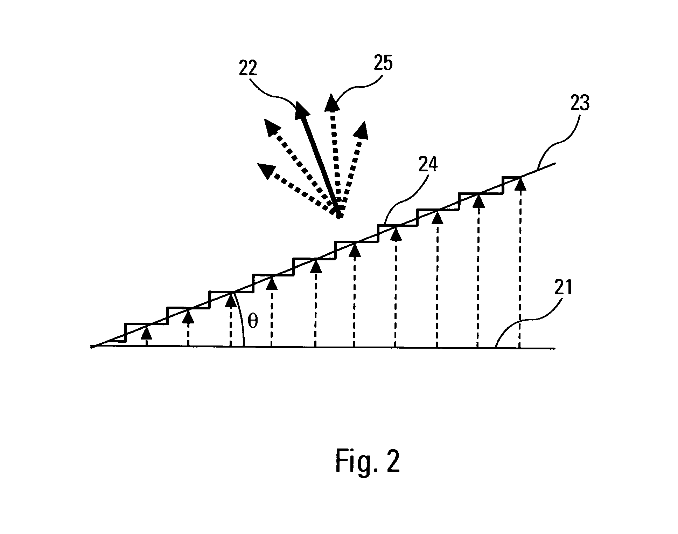

La figure 2 présente de manière imagée l'origine structurelle de l'apparition des lobes de réseau phénomène décrit précédemment dans le cas d'un seul faisceau. Par souci de clarté, les sous-réseaux sont représentés sur cette figure comme étant contigus et de même taille. Dans les antennes à FFC actuelles, les plans de phase des sous-réseaux sont orientés dans une direction fixe, identique pour tous les faisceaux formés. Des structures différentes, comportant par exemple des réseaux de tailles différentes et présentant un certain recouvrement, sont bien évidemment possibles.

La droite 21 figure le plan de phase de l'antenne globale et $\theta$ l'angle de dépointage du faisceau à former dont la direction est matérialisée par la flèche 22. La droite 23 représente le plan de phase idéal à réaliser pour obtenir le dépointage voulu. Ce plan idéal ne peut être obtenu qu'en ajustant le déphasage au niveau des T/R modules, ce qui ne peut pas être, comme cela a été dit précédemment, réalisé simultanément pour chacun des faisceaux à former.

En raison de l'organisation en sous-réseaux, cette droite va en réalité être approximée par la courbe en escalier 24 qui présente des discontinuités de phase à chaque changement de marche. Le signal correspondant à celui reçu par le faisceau considéré est obtenu par combinaison en amplitude et en phase des signaux issus de chaque sous-réseau 24. Néanmoins la correction d'amplitude et de phase apportée aux signaux issus de chacun des sous-réseaux ne permet pas l'orientation du plan de phase de chaque sous-réseau dans la direction du faisceau. Celle-ci fait un angle $\theta$ généralement non nul avec la normale au plan de phase d'un sous-réseau. Chaque pallier de la courbe 24 représente le plan de phase du sous-réseau correspondant. La combinaison des signaux est représentée sur la figure par les flèches pointillées 27. La formation du faisceau désiré 22 s'accompagne également de celle des lobes de réseaux 25 dont l'apparition est liée aux discontinuités de la courbe 24.

Dans l'exemple de la figure tous les sous-réseaux qui constituent le faisceau sont identiques et espacés d'une distance d. Le diagramme $G_n$ de réception associé à un faisceau $F_n$ a une expression de la forme suivante :

$$G_n = G_{SR}(\theta) \cdot \sum_n A_{nm} \cdot e^{j\varphi_{nm}} \cdot e^{-j2\pi m \frac{d}{\lambda} \sin \theta} \quad (1)$$

Où:

- $G_{SR}(\theta)$ représente le diagramme d'un sous-réseau,
- $A_{nm}$ et $e^{j\varphi_{nm}}$ correspondent aux corrections d'amplitude et de phase appliquées au signal issu du sous-réseau m dans la composition du faisceau $F_n$,
- m.d représente la distance du centre de phase du sous réseau m au centre du réseau.
- $\theta$ représente l'angle entre la normale au plan de phase du sous-réseau et la direction du faisceau.

Dans cette expression on voit apparaître le facteur $e^{-j2\pi m \frac{d}{\lambda} \sin \theta}$ responsable de la présence des lobes de réseaux. Ce facteur devient neutre dans le cas où $\theta$ est nul ce qui correspond au cas où les plans de phase des sous-réseaux sont tous perpendiculaires à la direction du faisceau. Ce facteur devient également neutre dans le cas où $d/_{\lambda}$ est très inférieur à 1, ce qui n'est pas réalisable étant donnée la taille des sous-réseaux.

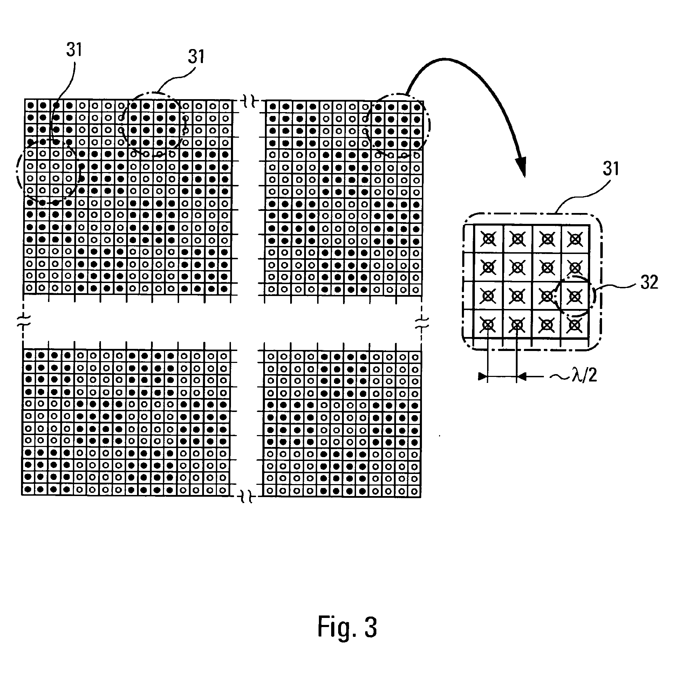

La figure 3 illustre le principe d'organisation d'une antenne à FFC adaptative selon l'invention. Dans cette antenne les T/R modules ne sont plus regroupés directement en sous-réseaux mais sont d'abord combinés par petits groupes de façon à constituer des unités de base 31 appelées clusters.

Un cluster est constitué d'un groupe de T/R modules reliés les uns aux autres au travers de circuits combineurs hyperfréquence. Comme sur la figure 3, les clusters constituant l'antenne sont par exemple disjoints et leur juxtaposition reconstitue l'intégralité de l'antenne. Le cluster représente l'élément de base d'une antenne à FFC adaptative selon l'invention.

Le nombre Q de T/R modules entrant dans la composition d'un cluster est quelconque et peut, par exemple, varier d'un cluster à l'autre dans une même antenne. A titre d'exemple, la figure 3 représente une antenne constituée d'un assemblage de clusters identiques formés chacun de seize T/R modules 32. Les T/R modules sont espacés les uns des autres d'une distance voisine de la demi-longueur d'onde du signal. Chaque T/R module est par ailleurs équipé d'un contrôle d'amplitude et de phase, qui permet d'orienter le plan de phase global de l'antenne.

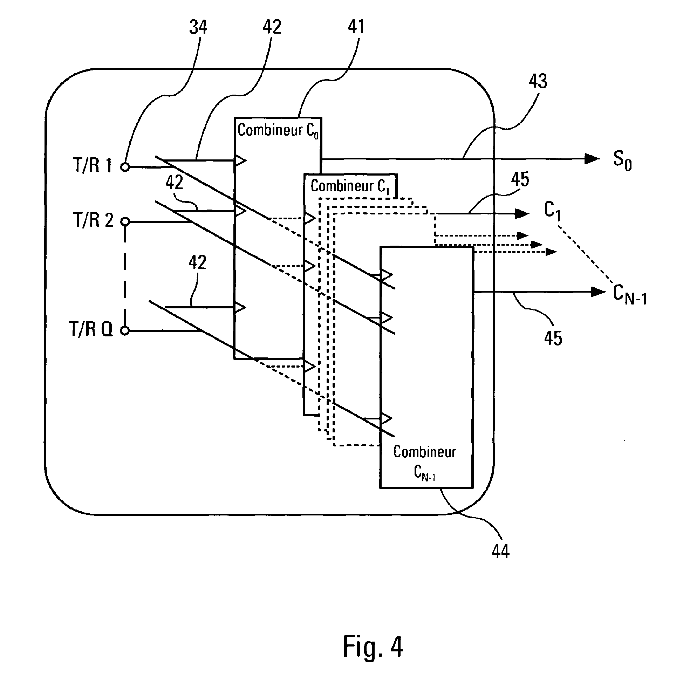

La figure 4 illustre la structure interne d'un cluster 31 selon l'invention. Au sein du cluster la sortie de chaque T/R module 32 est distribuée en parallèle sur les entrées de plusieurs combineurs hyperfréquence indépendants les uns des autres. Un combineur $C_0$, 41, réalise la somme des signaux 42 issus des différents T/R modules. Il produit ainsi un signal $S_0$, 43, correspondant à la voie de réception relative au faisceau d'antenne $F_0$, perpendiculaire au plan de phase de l'antenne. Les autres combineurs 44 effectuent la synthèse de signaux correcteurs $c_{fn}$, 45, correspondant à une somme pondérée des signaux issus des différents T/R modules. Cette pondération est réalisée en amplitude et en phase. Elle est spécifique à chaque faisceau d'antenne formé et permet d'obtenir pour chaque T/R module le signal correspondant à la différence existant entre le signal réellement reçu par le T/R module et le signal théorique qui serait reçu si le plan de phase du T/R module était orienté perpendiculairement à la direction du faisceau. Pour un plan de phase réel donné cette différence sera nulle seulement pour le signal reçu d'une direction perpendiculaire au plan de phase du T/R module, cette direction correspondant par exemple au faisceau d'antenne $F_0$.

Un cluster comporte donc un circuit sommateur permettant de constituer le faisceau $F_0$, pour lequel la différence entre le signal réel et le signal théorique est nulle. Il comporte en outre autant de circuits combineurs qu'il y a d'autres faisceaux d'antenne à former. Il compte ainsi une sortie 43 correspondant au signal relatif au faisceau $F_0$. et autant des sorties correctrices 45 que de faisceaux à former.

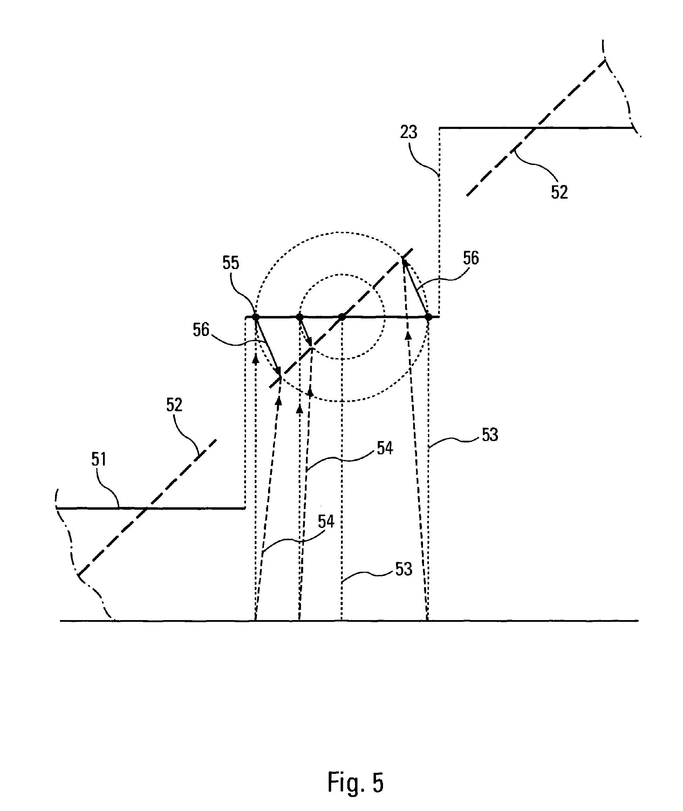

La figure 5 illustre de manière imagée, les imperfections liées à la découpe en sous-réseaux, et la façon dont il est possible de corriger ces imperfections grâce à la structure en cluster de l'antenne selon l'invention. Cette illustration représente une vue partielle grossie de l'illustration d'une antenne composée de sous-réseaux tel que représenté à la figure 2. Sur la figure, les paliers 51 représentent les plans de phase des différents sous-réseaux qui composent l'antenne, tandis que les segments de droites 52 figurent l'orientation des mêmes plans de phases permettant de former un faisceau dépourvu de lobes de réseaux dans une direction donnée. Cette direction est symbolisée par les flèches 52. L'orientation du plan de phase global de l'antenne étant figurée par la droite 23, on constate que le positionnement des plans de phase des différents sous-réseaux n'en représente qu'une approximation. Ce positionnement est réalisé en appliquant à chaque signal issu d'un T/R module un même déphasage $\varphi_{re}$ figuré par les vecteurs 53. Les signaux ainsi déphasés sont ensuite sommés pour former la voie de réception du sous-réseau considéré. L'approximation ainsi réalisée est responsable de l'apparition des lobes de réseaux.

Grâce à sa structure organisée en clusters, l'antenne selon l'invention permet de corriger les imperfections du signal obtenu. A cet effet, pour chaque faisceau le cluster fourni un signal de correction élaboré en effectuant une somme pondérée des signaux issus des T/R modules qui le composent. On obtient ainsi pour chaque signal issu d'un T/R module, un signal correcteur élémentaire permettant de compenser la différence $\Delta\varphi$ existant entre le déphasage réellement appliqué au T/R module et le déphasage théorique permettant d'obtenir un faisceau dépourvu de lobes de réseaux. Les signaux de correction sont illustrés sur la figure 5 sous la forme des vecteurs 56.

Au sein du cluster les signaux correcteurs élémentaires correspondant à un même faisceau $F_i$ sont sommés de façon à constituer un signal correcteur somme $c_{Fn}$. On dispose ainsi à la sortie du cluster des informations nécessaires pour former des faisceaux dépourvus de lobes de réseaux.

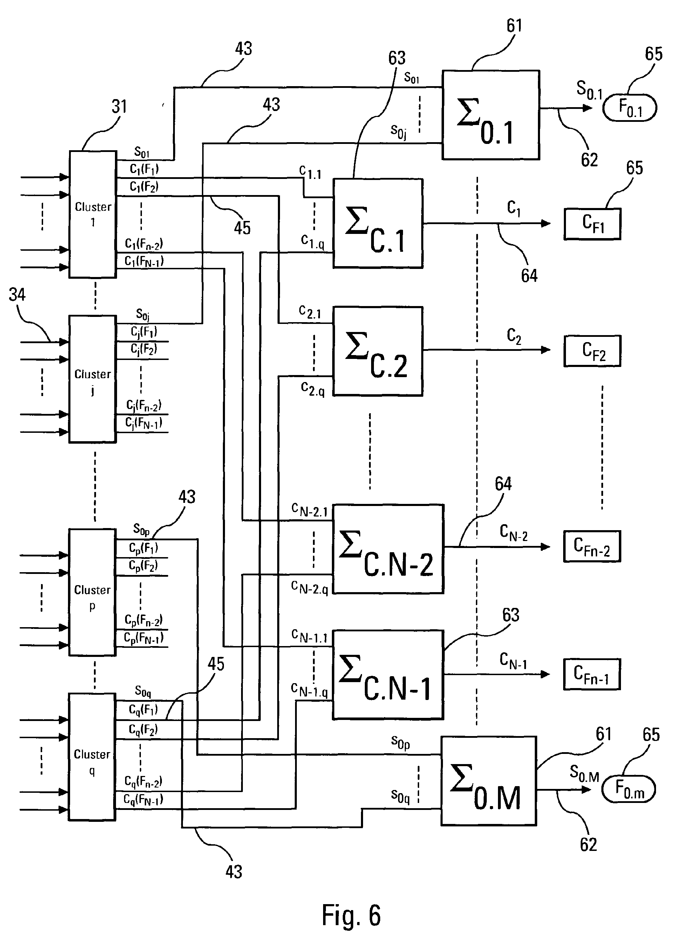

La figure 6 présente de manière schématique un exemple de structure complète de l'antenne selon l'invention. Dans cette structure les sorties 34 des T/R modules sont réparties sur différents clusters 31. Les sorties 43 de plusieurs clusters formant un même sous-réseau, sont appliquées aux entrées d'un circuit sommateur 61 de façon à élaborer, à partir des signaux $s_{0.i}$ issu de chaque cluster du sous-réseau, un signal 62 correspondant au signal $S_{0.r}$ reçu par le sous-réseau r dans la direction du faisceau $F_0$ perpendiculaire au plan de phase de l'antenne.

De la même façon, les sortie 45 des tous les clusters correspondant à un même faisceau sont appliquées aux entrées d'un circuit sommateur 63 de façon à obtenir, à partir des signaux $c_{n.k}$ issu de chaque cluster, un signal correcteur $C_n$, 64. Ce signal permet de reconstituer le signal reçu par l'antenne dans la direction du faisceau $F_n$.

La structure comporte donc autant de circuits sommateurs qu'il y a de sous-réseaux et de faisceaux à former. Les sorties des différents circuits sommateurs sont ensuite appliquées à des récepteurs 65, intégrés ou non à l'antenne, qui effectuent la démodulation et la numérisation des signaux. Le nombre de récepteurs nécessaires est ici avantageusement égal à la somme du nombre de sous-réseaux constituant l'antenne et du nombre de faisceaux formés moins un. Ainsi pour une antenne comportant M sous-réseaux et formant N faisceaux, le nombre R de récepteurs nécessaires à l'exploitation du signal reçu aura pour valeur $R = M + (N - 1)$.

La formation de faisceaux par le calcul est ici réalisée de manière quasi classique en calculant la matrice W des coefficients de correction à appliquer au signal issu de chaque sous-réseau. Cette matrice a pour expression :

$$W = R_x^{-1} * \Phi_0.$$

Dans cette relation, le terme $\Phi_0$ quant à lui, correspond au vecteur direction qui définit le déphasage global à apporter aux signaux issus des différents sous-réseaux. Dans le cas d'une antenne selon l'invention, il diffère cependant du terme $\Phi_0$ caractérisant une antenne à sous-réseaux classique, en ce qu'il compte autant de ligne que de sous-réseaux et une ligne supplémentaire relative à la correction correspondant au faisceau considéré.

Ainsi, $\Phi_0$ peut s'écrire :

$$
\begin{pmatrix}
e^{j\varphi} & 0 & \vdots & 0 & 0 \\
0 & e^{2j\varphi} & \vdots & 0 & 0 \\
\cdots & \cdots & \vdots & \cdots & \cdots \\
0 & 0 & \vdots & e^{mj\varphi} & 0 \\
0 & 0 & \vdots & 0 & 1
\end{pmatrix}
$$

De même pour l'antenne selon l'invention, $R_x$ représente la matrice de covariance du signal composé des signaux provenant des différents sous-réseaux et du signal correcteur relatif au faisceau considéré. Comme dans le cas de $\Phi_0$, $R_x^{-1}$ compte donc une ligne de plus que dans le cas d'une antenne à sous-réseaux classique. En l'absence de brouilleurs la matrice $R_x^{-1}$ correspond à une matrice unité.

Il apparaît donc possible de réaliser à partir de l'antenne selon l'invention une antenne multifaisceaux dont les faisceaux sont avantageusement dépourvus de lobes de réseaux. Une telle antenne présente l'avantage de ne nécessiter qu'un nombre réduit de récepteurs supplémentaires par rapport à une antenne multifaisceaux classique comportant le même nombre de sous-réseaux. Pour une antenne présentant N faisceaux le nombre de récepteurs supplémentaires est par exemple égal à N-1.

La formation du faisceau $F_0$ est réalisée par sommation des signaux $S_{0.r}$ issu des différents sous-réseaux. La somme des différents signaux $S_{0.r}$ constitue le signal global $S_0$. La formation des autres faisceaux $F_n$ est quant à elle réalisée en effectuant la correction du signal $S_0$ correspondant au faisceau $F_0$ par le signal correcteur $C_n$ se rapportant au faisceau $F_n$.

**Revendications**

1. Antenne multifaisceaux à formation de faisceaux par le calcul permettant de former N faisceaux, comportant des T/R modules regroupés au sein de clusters (31), les clusters étant regroupés en sous-réseaux formant des antennes élémentaires et des moyens (41) pour délivrer sur une sortie (43) du cluster un signal $s_{0.k}$ égal à la somme des signaux issus des T/R modules regroupés dans le cluster, ce signal somme correspondant au signal reçu par le cluster dans la direction du faisceau $F_0$ perpendiculaire au plan de phase de l'antenne,
   **caractérisée en ce que** chaque cluster k comporte en outre des moyens (44) pour délivrer, sur N-1 sorties (45), N-1 signaux de correction $c_{n,k}$; chaque signal de correction correspondant à un faisceau $F_n$ donné et étant égal à la somme de signaux correcteurs élémentaires, un signal de correction élémentaire étant associé à un T/R module et correspondant à la différence entre le signal (42) réellement reçu par le T/R module et le signal qui serait théoriquement reçu si le plan de phase du T/R module était perpendiculaire à la direction du faisceau $F_n$ considéré, le signal de correction $c_{n,k}$ permettant de construire le signal reçu par le cluster dans la direction correspondant à un faisceau $F_n$ différent du faisceau $F_0$;

2. Antenne selon la revendication 1, **caractérisé en ce que** chaque signal de correction élémentaire est obtenu en multipliant le signal (42) reçu par chaque T/R module par un coefficient de pondération ayant un terme d'amplitude et un terme de phase.

3. Antenne selon la revendication 1, **caractérisée en ce que** le signal de correction $c_{n,k}$, relatif à un faisceau $F_n$, permet de compenser la différence $\Delta\varphi$ existant entre le déphasage (53) réellement appliqué aux T/R modules et le déphasage théorique (54) devant être appliqué à chaque T/R module pour obtenir un faisceau $F_n$ dépourvu de lobes de réseaux.

4. Antenne selon une quelconque des revendication 1 ou 2, **caractérisée en ce qu'**elle comporte pour chaque sous-réseau m, un circuit sommateur (61) qui effectue la somme des signaux $s_{0.k}$ issue des clusters composant ce sous-réseau m de façon à former le signal $S_{0.m}$ (62) reçu par le sous-réseau m dans la direction du faisceau $F_0$, et qu'elle

comporte pour chaque faisceau $F_n$ un circuit sommateur (63) qui effectue la somme des signaux $c_{n.k}$ issus de l'ensemble des clusters de façon à former le signal de correction global $C_n$ (64) permettant de construire le signal $S_n$ reçu par l'antenne globale dans la direction d'un faisceau $F_n$ à partir du signal $S_0$ reçu par l'antenne globale dans la direction du faisceau $F_0$.

**5.** Antenne selon l'une quelconque des revendications précédentes, **caractérisée en ce que** la formation d'un faisceau est réalisée par traitement numérique, après réception et codage des signaux $S_{0.m}$ (62) et $C_n$ (64) par des circuits récepteurs (65).

**6.** Antenne selon la revendication précédente, **caractérisée en ce que**, M étant le nombre de sous-réseaux composant l'antenne, le nombre de récepteurs (65) utilisés pour la formation des N faisceaux est égal à M + N - 1.

**Claims**

**1.** Multibeam antenna with computational beam forming making it possible to form N beams, comprising T/R modules grouped together within clusters (31), the clusters being grouped into sub-arrays forming elementary antennas and means (41) for delivering on an output (43) of the cluster a signal $s_{0.k}$ equal to the sum of the signals arising from the T/R modules grouped together in the cluster, this sum signal corresponding to the signal received by the cluster in the direction of the beam $F_0$ perpendicular to the phase plane of the antenna,
**characterized in that** each cluster k furthermore comprises means (44) for delivering, on N-1 outputs (45), N-1 correction signals $c_{n,k}$; each correction signal corresponding to a given beam $F_n$ and being equal to the sum of elementary correction signals, an elementary correction signal being associated with a T/R module and corresponding to the difference between the signal (42) actually received by the T/R module and the signal which would theoretically be received if the phase plane of the T/R module were perpendicular to the direction of the beam $F_n$ considered, the correction signal $c_{n,k}$ making it possible to construct the signal received by the cluster in the direction corresponding to a beam $F_n$ which differs from the beam $F_0$.

**2.** Antenna according to Claim 1, **characterized in that** each elementary correction signal is obtained by multiplying the signal (42) received by each T/R module by a weighting coefficient having an amplitude term and a phase term.

**3.** Antenna according to Claim 1, **characterized in that** the correction signal $c_{n.k}$, relating to a beam $F_n$, makes it possible to compensate for the difference $\Delta\varphi$ existing between the phase shift (53) actually applied to the T/R modules and the theoretical phase shift (54) having to be applied to each T/R module to obtain a beam $F_n$ devoid of grating lobes.

**4.** Antenna according to either of Claims 1 or 2, **characterized in that** it comprises for each sub-array m, a summator circuit (61) which calculates the sum of the signals $s_{0.k}$ arising from the clusters making up this sub-array m so as to form the signal $S_{0.m}$ (62) received by the sub-array m in the direction of the beam $F_0$, and that it comprises for each beam $F_n$ a summator circuit (63) which calculates the sum of the signals $c_{n.k}$ arising from the whole set of clusters so as to form the global correction signal $C_n$ (64) making it possible to construct the signal $S_n$ received by the global antenna in the direction of a beam $F_n$ on the basis of the signal $S_0$ received by the global antenna in the direction of the beam $F_0$.

**5.** Antenna according to any one of the preceding claims, **characterized in that** the formation of a beam is carried out by digital processing, after reception and coding of the signals $S_{0.m}$ (62) and $C_n$ (64) by receiver circuits (65).

**6.** Antenna according to the preceding claim, **characterized in that**, M being the number of sub-arrays making up the antenna, the number of receivers (65) used for forming the N beams is equal to M + N - 1.

**Patentansprüche**

**1.** Mehrfachstrahlantenne mit Strahlformung durch Berechnung, die das Formen von N Strahlen ermöglicht, die innerhalb von Clustern (31) zusammengefasste T/R-Module, wobei die Cluster in Elementarantennen bildenden Teilgittern zusammengefasst sind, und Mittel (41) aufweist, um an einem Ausgang (43) des Clusters ein Signal $s_{0.k}$ zu liefern, das gleich der Summe der von den im Cluster zusammengefassten T/R-Modulen stammenden Signale ist, wobei dieses Summensignal dem Signal entspricht, das von dem Cluster in Richtung des Strahls $F_0$ lotrecht

zur Phasenebene der Antenne empfangen wird,

**dadurch gekennzeichnet, dass** jeder Cluster k außerdem Mittel (44) aufweist, um an N-1 Ausgängen (45) N-1 Korrektursignale $c_{n.k}$ zu liefern; wobei jedes Korrektursignal einem gegebenen Strahl $F_n$ entspricht und gleich der Summe von elementaren Korrektursignalen ist, wobei ein elementares Korrektursignal einem T/R-Modul zugeordnet ist und der Differenz zwischen dem tatsächlich von dem T/R-Modul empfangenen Signal (42) und dem Signal entspricht, das theoretisch empfangen würde, wenn die Phasenebene des T/R-Moduls im rechten Winkel zur Richtung des betrachteten Strahls $F_n$ wäre, wobei das Korrektursignal $c_{n.k}$ es ermöglicht, das vom Cluster empfangene Signal in der Richtung zu konstruieren, die einem Strahl $F_n$ entspricht, der sich vom Strahl $F_0$ unterscheidet.

2. Antenne nach Anspruch 1, **dadurch gekennzeichnet, dass** jedes elementare Korrektursignal durch Multiplizieren des von jedem T/R-Modul empfangenen Signals (42) mit einem Gewichtungskoeffizient erhalten wird, der einen Amplitudenterm und einen Phasenterm hat.

3. Antenne nach Anspruch 1, **dadurch gekennzeichnet, dass** das Korrektursignal $c_{n.k}$ bezüglich eines Strahls $F_n$ es ermöglicht, die Differenz $\Delta\varphi$ zu kompensieren, die zwischen der tatsächlich an die T/R-Module angewendeten Phasenverschiebung (53) und der theoretischen Phasenverschiebung (54) existiert, die an jedes T/R-Modul angewendet werden muss, um einen Strahl $F_n$ zu erhalten, der keine Gittervorsprung aufweist.

4. Antenne nach einem der Ansprüche 1 oder 2, **dadurch gekennzeichnet, dass** sie für jedes Teilgitter m eine Summierschaltung (61) aufweist, die die Summe der Signale $s_{0.k}$ bildet, die von den Clustern stammen, die dieses Teilgitter m bilden, um das Signal $S_{0.m}$ (62) zu formen, das von dem Teilgitter m in Richtung des Strahls $F_0$ empfangen wird, und dass sie für jeden Strahl $F_n$ eine Summierschaltung (63) aufweist, die die Summe der Signale $c_{n.k}$ bildet, die von der Gesamtheit der Cluster stammen, um das globale Korrektursignal $C_n$ (64) zu formen, das es ermöglicht, das Signal $S_n$ zu konstruieren, das von der globalen Antenne in Richtung eines Strahls $F_n$ ausgehend von dem Signal $S_0$ empfangen wird, das von der globalen Antenne in Richtung des Strahls $F_0$ empfangen wird.

5. Antenne nach einem der vorhergehenden Ansprüche, **dadurch gekennzeichnet, dass** das Formen eines Strahls durch digitale Verarbeitung nach dem Empfang und der Codierung der Signale $S_{0.m}$ (62) und $C_n$ (64) durch Empfangsschaltungen (65) durchgeführt wird.

6. Antenne nach dem vorhergehenden Anspruch, **dadurch gekennzeichnet, dass**, wenn M die Anzahl von die Antenne bildenden Teilgittern ist, die Anzahl von Empfängern (65), die zum Formen der N Strahlen verwendet werden, gleich M + N - 1 ist.

Fig. 1

Fig. 2

Fig. 3

Fig. 4

Fig. 5

Fig. 6

**EP 1 533 866 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2838244